# EUROPÄISCHE PATENTSCHRIFT

(11) **EP 0 629 425 B1**
(45) Veröffentlichungstag und Bekanntmachung des Hinweises auf die Patenterteilung: **09.04.1997**
(21) Anmeldenummer: 94102299.8
(22) Anmeldetag: 16.02.1994
(51) Int. Cl.: B01D 29/09, B01D 33/04

(54) **Bandfiltereinrichtung zur Reinigung von Bearbeitungsflüssigkeiten**
Bandfilter device for the purification of processing liquids
Dispositif filtrant à bande pour la purification des liquides d'usinage

(30) Priorität: 19.06.1993 DE 4320387
(43) Veröffentlichungstag der Anmeldung: 21.12.1994
(73) Patentinhaber: FILTERWERK MANN & HUMMEL GmbH, D-71638 Ludwigsburg (DE)
(72) Erfinder: Reynders, Luc, B-3770 Riemst (BE)
(74) Vertreter: Voth, Gerhard, Dipl.-Ing.

(56) Entgegenhaltungen:
- DE-B- 1 144 691
- US-A- 4 514 301
- US-A- 4 661 251

## Beschreibung

Die Erfindung betrifft eine Bandfiltereinrichtung zur Reinigung verunreinigter Flüssigkeiten mit einer oberen, die verunreinigte Flüssigkeit aufnehmende Schmutzkammer, eine darunter angeordnete und die gereinigte Flüssigkeit aufnehmende Reinkammer sowie einem dazwischen angeordneten, mit Flüssigkeitsdurchtrittsöffnung versehenen Filterboden, auf dem ein umlaufendes Filterband in Abhängigkeit von der Menge der auf ihm abgelagerten Verunreinigung automatisch fortbewegbar angeordnet ist und wobei außerhalb der Schmutzkammer eine Reinigungseinrichtung, welche die auf dem Filterband haftende Verunreinigung entfernt, vorgesehen ist.

Aus der EP-A 0 228 210 ist eine solche Bandfiltereinrichtung bekannt. Diese arbeitet nach dem Unterdruckprinzip, d.h. ein umlaufendes Filterband liegt auf einem Siebboden auf. Unterhalb des Siebbodens befindet sich eine Unterdruckkammer, in welche die Flüssigkeit durch das Filterband hindurchgesaugt wird. Durch eine diskontinuierliche Förderbewegung des Filterbandes wird der auf dem Filterband sich ablagernde Schmutz über einen Austragehals aus dem Flüssigkeitsbehälter herausgefördert und mit einer Filterbandreinigungseinrichtung, beispielsweise einem Schaber oder einer Abblaseinrichtung der Schmutz entfernt. Das Filterband durchläuft anschließend eine Waschstation, die den Restschmutz auf dem Filterband abwäscht, wobei dieser Restschmutz in die Schmutzkammer zurückgeführt wird.

Das hier verwendete Filterband ist relativ grobmaschig, so daß nur Schmutz bis zu einer bestimmten Korngröße aus der Schmutzflüssigkeit herausgefiltert werden kann. Sollen jedoch auch sehr feine Schmutzpartikel, beispielsweise Schleifstaub u.ä. ausgefiltert werden, dann muß anstelle des umlaufenden Filterbandes ein Filtervlies eingesetzt werden, welches nur einen einmaligen Gebrauch zuläßt und nach Durchlauf durch die Bandfiltereinrichtung mit dem anfallenden Schmutz entsorgt wird. Die Entsorgung dieses Filtervlieses ist jedoch aufwendig. Außerdem muß von Zeit zu Zeit eine neue Filtervliesrolle eingelegt werden, so daß eine zusätzliche Überwachung notwendig wird. Eine solche Bandfiltereinrichtung ist beispielsweise in dem DE-GM 87 15 433 beschrieben. Ein Nachteil solcher Einmalfilter besteht außerdem darin, daß eine Entsorgung problematisch ist.

Aus der US-PS 45 14 301 ist eine Bandfiltereinrichtung bekannt, bei der die Reinigungseinrichtung unterhalb des Filterbandes angeordnet ist. Die Reinigungsflüssigkeit trifft auf die Rückseite des Filterbandes auf, wobei der Schmutz weggespült und in einem Auffangbehälter aufgefangen wird. Gleichzeitig fließt die gesamte Reinigungsflüssigkeitsmenge in die Schmutzkammer.

Ein Nachteil dieser Bandfiltereinrichtung besteht in dem hohen Verbrauch an Reinigungsflüssigkeit für die Abreinigung des Filterbandes.

Ein weiterer Nachteil von Bandfiltereinrichtungen mit einer Waschstation war bisher der hohe Aufwand, der für eine solche Naschstation erforderlich war. Um eine ausreichende Reinigung zu erzielen und um andererseits sicherzustellen, daß die Flüssigkeit, die zur Abreinigung erforderlich war, in die Schmutzkammer gelangte, mußten Flüssigkeitskanäle, Pumpe, Abdeckungen und Gehäuse angeordnet werden.

Der Erfindung liegt deshalb die Aufgabe zugrunde, eine Bandfiltereinrichtung zu schaffen, die mit einem umlaufenden Filterband ausgestattet ist und die eine Reinigungseinrichtung mit einem einfachen konstruktiven Aufbau aufweist, wobei der von der Reinigungseinrichtung abgewaschene Schmutz unmittelbar in die Schmutzkammer eingeleitet wird. Diese Aufgabe wird ausgehend von dem Oberbegriff des Hauptanspruchs durch dessen kennzeichnende Merkmale gelöst.

Der wesentliche Vorteil der Erfindung ist darin zu sehen, daß ein Sprühkopf oberhalb des Pegels der verunreinigten Flüssigkeit angeordnet ist und von der Rückseite her auf das Filterband einwirkt. Der Sprühkopf wird dabei selbstverständlich mit gereinigter Flüssigkeit versorgt. Da der Sprühkopf innerhalb des umlaufenden Filterbandes angeordnet ist, wird die Erzeugung eines Sprühnebels, der die Umgebung der Bandfiltereinrichtung beeinträchtigt, weitestgehend vermieden, so daß aufwendige Abschirmungen oder Abdeckbleche nicht erforderlich sind. Ausserdem ist vorgesehen, den von dem Filterband reflektierten Teil der Reinigungsflüssigkeit über eine Auffangrinne wieder der Reinkammer zuzuführen. Dies hat den Vorteil, daß nur die tatsächlich zur Reinigung benötigte Flüssigkeit, d.h. nur die, welche auch durch das Filterband hindurchtritt und den Schmutz aus dem Filterband löst, verbraucht wird und nicht der gesamte, aus dem Sprühkopf austretende Flüssigkeitsstrahl. Damit erzielt die Bandfiltereinrichtung einen höheren Wirkungsgrad.

Die Abreinigung des Filterbandes erfolgt während dem Stillstand desselben. Hierzu führt der Sprühkopf eine XY-Bewegung aus. Ein Vorteil, der durch die Abreinigung während des Stillstandes erzielt wird, ist darin zu sehen, daß die Abreinigungsgeschwindigdkeit und Abreinigungszeit beliebig variiert werden kann und nicht von der Transportgeschwindigkeit des Filterbandes abhängig ist.

Eine weitere Ausgestaltung der Bandfiltereinrichtung besteht darin, daß an beiden Seiten des Filterbandes Transportketten vorgesehen sind und das Filterband an diesen Transportketten befestigt und geführt ist. Die Ketten sind hierzu mit Laschen versehen, welche geeignet sind, das Filterband in der neutralen Faser der Kette, d.h. in der Mitte der Kette zu befestigen. Durch diese Anordnung ist gewährleistet, daß auch bei der Umlenkung der Kette keine Relativbewegung zwischen Filterband und Kette auftreten.

Gemäß einer weiteren Ausgestaltung der Erfindung ist ein Abdichtprofil innerhalb der Schmutzkammer an beiden Seiten des Filterbandes vorgesehen. Dieses Abdichtprofil ist beispielsweise eine Kunststoffleiste, die unmittelbar auf dem Filterband anliegt und beispielsweise über Federn vorgespannt ist. Damit wird eine gute Abdichtung des Schmutzraumes von dem Reinraum gewährleistet. Das Filterband gleitet bei einer Transportbewegung unter dem Abdichtprofil entlang. Es ist deshalb zweckmäßig, einen Kunststoff zu wählen, der gute Gleiteigenschaften aufweist.

Die Bandefiltereinrichtung ist gemäß einer vorteilhaften Ausgestaltung der Erfindung V-förmig ausgebildet. Damit die Kette in dem unteren Bereich der Schmutzkammer problemlos durchgeführt werden kann, sind dort Umlenkhilfen vorgesehen, welche oberhalb der Kette angeordnet sind und an welche sich die Kette in diesem Bereich abstützt. Die Kette ist mit Rollenkörper versehen. Damit ist ein besonders leichtgängiger Lauf der Kette gewährleistet.

Eine weitere Ausgestaltung der Erfindung sieht vor, eine Spannvorrichtung für die Kette im Bereich der oberen Umlenkung anzuordnen. Diese Spannvorrichtung kann auch mit der Umlenkeinrichtung kombiniert werden, d.h. die Umlenkeinrichtung ist verschiebbar angeordnet und wird beispielsweise von einer Feder mit einer Kraft beaufschlagt, die ein kontinuierliches Spannen der Kette sicherstellt.

Eine vorteilhafte Weiterbildung der Erfindung sieht vor, Flachspüldüsen mit einem flachen Sprühstrahl zu verwenden. Sind zwei Düsen nebeneinander angeordnet, so können diese beispielsweise eine Fläche mit einer Länge von ca. 90 mm besprühen. Die Düsen sind sowohl in X- als auch in Y-Richtung über Führungselemente beweglich angeordnet und an einer umlaufenden Kette befestigt. Diese Art der Düsenbewegung gestattet eine Abreinigung des Filterbandes über die gesamte Breite desselben. Die Länge des gereinigten Filterbandes beträgt dabei etwa 170 mm.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispiels näher erläutert. Es zeigt
- Figur 1a: die schematische Darstellung einer Bandfiltereinrichtung in einer perspektivischen Ansicht
- Figur 1b: das Filterband in der endgültigen Einbaulage
- Figur 2: einen Schnitt durch eine Bandfiltereinrichtung
- Figur 3: die Detaildarstellung der Befestigung des Filterbandes an einer Endloskette
- Figur 4: eine schematische Darstellung einer Einrichtung zur Bewegung des Sprühkopfes
- Figur 5: eine schematische Seitenansicht der Bandfiltereinrichtung.

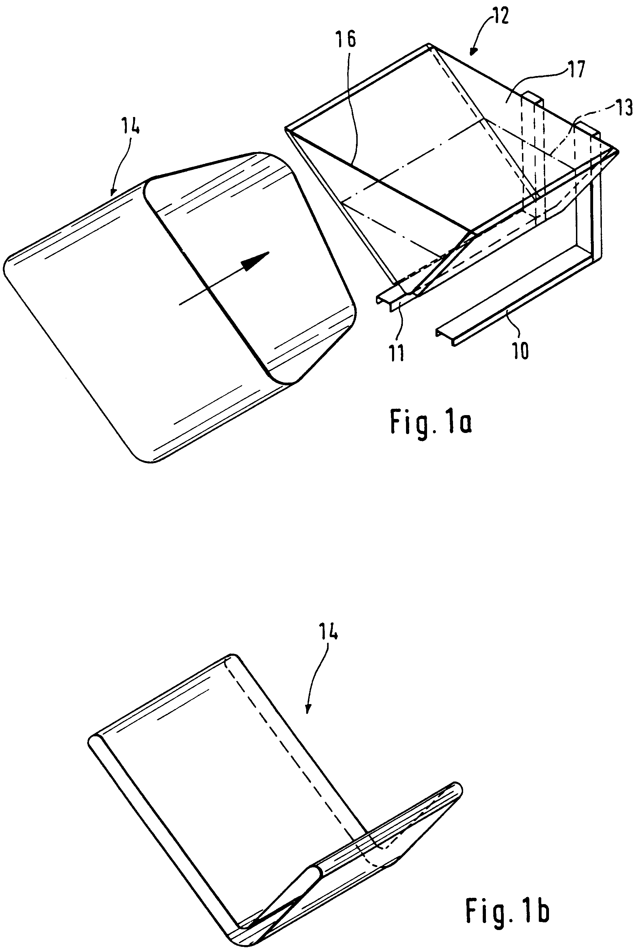

Die Bandfiltereinrichtung gemäß Figur 1a besteht aus einem Gestell 10, 11, an welches eine im wesentlichen V-förmige Filterkammer 12 befestigt ist. In diese Filterkammer 12 wird Schmutzflüssigkeit 13 eingeleitet. Zum Einbau des Filterbandes 14, welches in Figur 1a seitlich dargestellt ist, wird die Schmutzflüssigkeit 13 aus der Filterkammer 12 entfernt, das Filterband 14 in der gezeigten Weise über die Filterkammer geschoben und an hier nicht dargestellten Endlosketten, welche an beiden Seitenwänden 16, 17 verlaufen, befestigt. In der Einbaulage hat das Filterband die in Figur 1b gezeigte Form.

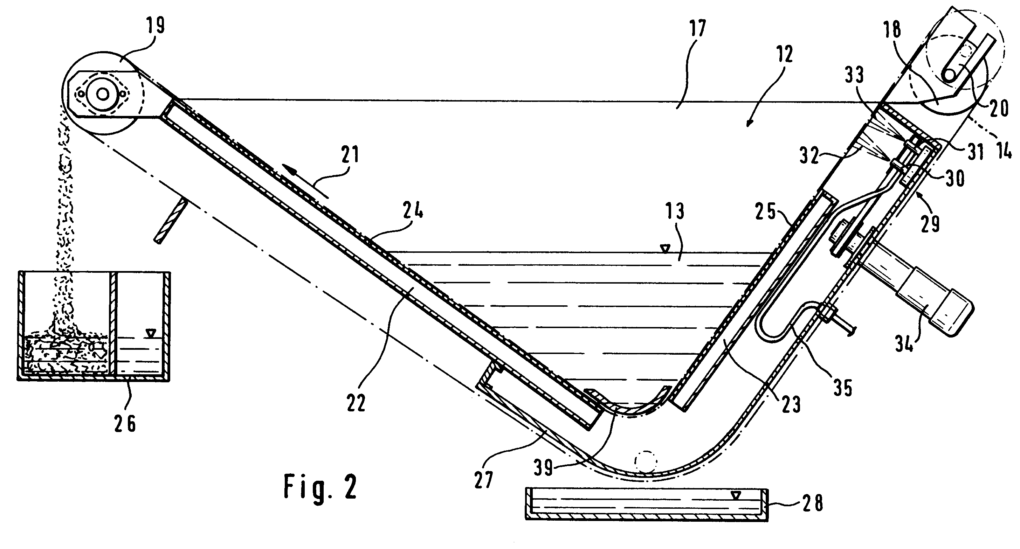

Die Figur 2 zeigt in einer Schnittdarstellung die Bandfiltereinrichtung. Diese besteht aus der Filterkammer 12 mit der Seitenwand 17. Innerhalb der Filterkammer 12 befindet sich Schmutzflüssigkeit 13. Das Filterband 14 läuft über Umlenkrollen 18, 19, wobei die Umlenkrolle 18 gleichzeitig als Spannrolle ausgeführt ist und längs eines Führungsschlitzes 20 bewegbar ist. Die Transportbewegung des Filterbands 14 verläuft in Richtung des Pfeils 21. Unterhalb des Filterbands sind im Bereich der Reinflüssigkeitskammern 22, 23 Sieb- oder Lochböden 24, 25 angeordnet. Auf diesen liegt das Filterband 14 auf. Der von dem Filterband 14 zurückgehaltene Schmutz gelangt über die Umlenkrolle 19 nach außen und fällt dort von dem Filterband ab und in einen bereitstehenden Behälter 26 bzw. wird mittels eines Abstreifers von dem Filterband entfernt. Das zunächst noch ungereinigte Filterband läuft unterhalb der Filterkammer 12 zurück und gelangt über die Umlenkrolle 18 wieder in den Bereich der Filterkammer 12. Die Reinflüssigkeitskammern 22, 23 leiten die Flüssigkeit in den Trichter 27. Flüssigkeit läuft seitlich aus dem Trichter in den Reinbehälter.

Im unteren Bereich der Bandfiltereinrichtung befindet sich eine Aufnahmewanne 28. In dieser wird die von dem Filterband 14 abtropfende Flüssigkeit aufgefangen und filtriert über ein angeordnetes Filterband in den Reinbehälter geleitet. Zwischen dem rücklaufenden Filterband 14 und dem in die Filterkammer 12 einlaufenden Filterband ist eine Reinigungseinrichtung 29 angeordnet. Diese besteht beispielsweise aus zwei Düsen 30, 31, welche jeweils einen Sprühstrahl 32, 33 in Richtung des Filterbandes erzeugen. Der Sprühstrahl reinigt das Filterband 14 sozusagen von unten her. Die Schmutzpartikel werden nach oben ausgewaschen und gelangen unmittelbar in die Schmutzflüssigkeit 13. Die von dem Filterband 14 reflektierte Flüssigkeit, welche keine Schmutzpartikel enthält, kann in die Reinflüssigkeitskammer 23 eingeleitet werden.

Die beiden Düsen 30, 31 werden mittels eines Motors 34 in X- und Y-Richtung unter dem Filterband 14 bewegt. Zur Versorgung der Düsen mit Reinigungsflüssigkeit ist ein flexibler Schlauch 35 vorgesehen, der mittels einer hier nicht dargestellten Pumpe mit der entsprechenden Flüssigkeit, im Normalfall ist dies die gereinigte Flüssigkeit, die der Bandfiltereinrichtung entnommen wird, versorgt wird.

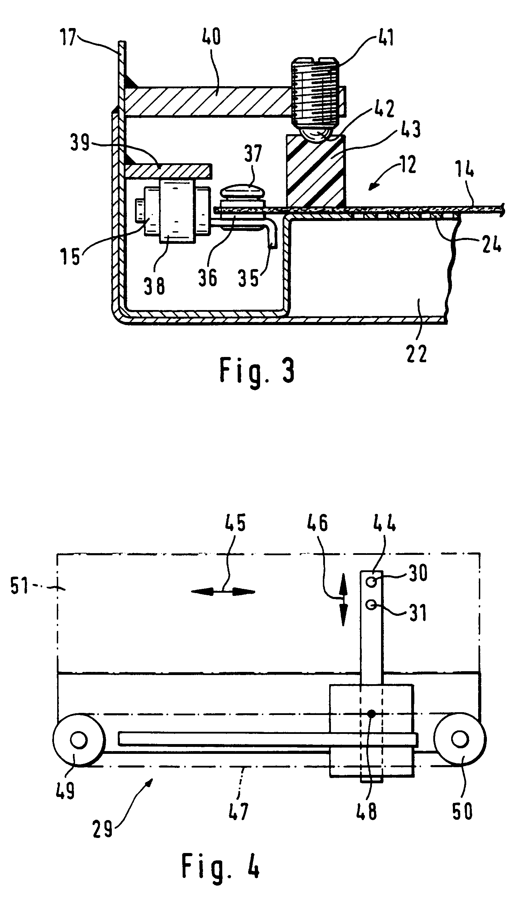

Die Detaildarstellung gemäß Figur 3 zeigt die Abdichtung der Reinflüssigkeitskammer 22 gegenüber der Filterkammer 12 und der darin enthaltenen Schmutzflüssigkeit 13 im Bereich der Seitenwand 17. Das Filterband 14 liegt auf dem Lochboden 24 auf und ist im Bereich der Seitenwände an die Endloskette 15 angeklipst. Hierzu weist die Endloskette 15 innerhalb gewisser Abstände Laschen 35 auf. Diese Laschen sind mit Befestigungsknöpfen 36 versehen. Auf diese Befestigungsknöpfe 36 ist das Filterband 14 aufgelegt und über einsteckbare Halteköpfe 37 fixiert. Die Befestigung des Filterbandes und ebenso das Entfernen des Filterbandes läßt sich ohne besondere Hilfsmittel vornehmen, falls dieses erneuert werden muß. Die Endloskette 15 ist als eine Rollenkette aufgebaut. Die Rollen 38 stützen sich im unteren Bereich der Filterkammer 12 an einer Umlenkhilfe 39 ab.

Oberhalb von Kette und Filterband befindet sich ein Träger 40. An diesen sind Kugelandruckelemente 41 angeordnet. Diese Kugelandruckelemente erzeugen über Kugeln 42 eine Kraft auf ein Kunststoffprofil 43, welches mit seiner unteren Fläche auf dem Filterband 14 aufliegt. Durch diese Maßnahme wird eine zuverlässige Abdichtung zwischen der Schmutzflüssigkeit 13, die sich auch im Bereich der Endloskette 15 befindet, und der Reinflüssigkeitskammer 22 erzielt.

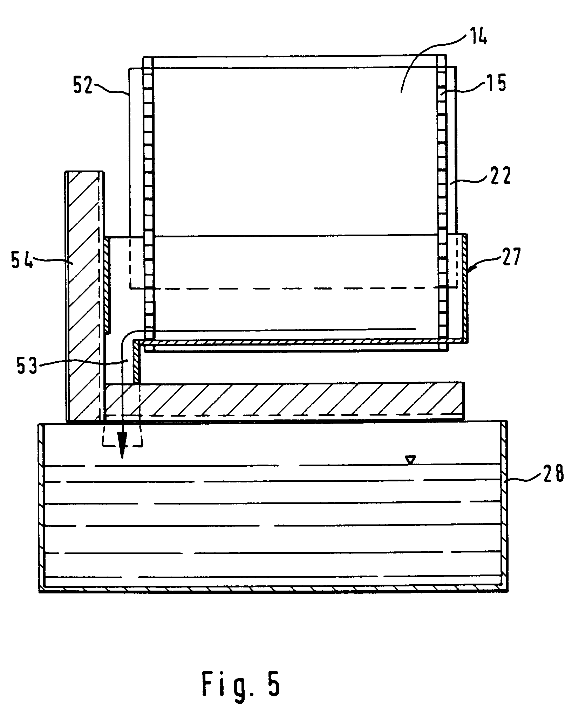

Figur 4 zeigt die schematische Darstellung der Abreinigungseinrichtung 29. Die Düsen 30, 31 sind auf einer Traverse 44 angeordnet. Diese Traverse ist sowohl in Richtung des Pfeils 45 als auch in Richtung des Pfeils 46 bewegbar und an einer Kette 47 über den Befestigungspunkt 48 befestigt. Die Kette läuft über die Kettenräder 49, 50. Damit wandert der Befestigungspunkt 48 sowohl längs des Pfeils 45 und die Düsen 30, 31 reinigen das Filterband über dessen Breite. Gleichzeitig wandert der Befestigungspunkt 48 und damit auch die Düsen längs des Pfeils 46 aufgrund der Umlenkung der Kette 47 über die Kettenräder 49, 50, so daß insgesamt das Feld 51 des Filterbandes abgereinigt wird. Diese Vorrichtung arbeitet sehr zuverlässig und ist insbesondere auch dort einsetzbar, wo sie Sprühnebel oder Flüssigkeiten ausgesetzt ist.

Die Figur 5 zeigt eine schematische Seitenansicht der Filtereinrichtung. Das Filterband 14 ist an den beiden Ketten 15, 52 befestigt. Seitlich des Filterbandes 14 befindet sich die Reinflüssigkeitskammer 22. Unter dieser Kammer ist ein Trichter 27 angeordnet. Die gefilterte Flüssigkeit, dies sich im Trichter 27 sammelt, fließt über einen Flüssigkeitsauslauf 53 in die Aufnahmewanne 28, die die Reinflüssigkeit aufnimmt. Die Filtereinrichtung mit dem Filterband, den Ketten 15, 52 und den Flüssigkeitsbehältern ist einseitig an einem Ständer 54 befestigt. Damit ist die Filtereinrichtung von einer Seite frei zugänglich und das endlose Filterband 14 kann in einfacher Weise ausgetauscht werden.

### Bezugszeichenliste

- 10: Gestell
- 11: Gestell
- 12: Filterkammer
- 13: Schmutzflüssigkeit
- 14: Filterband
- 15: Kette
- 16: Seitenwand
- 17: Seitenwand
- 18: Umlenkrolle
- 19: Umlenkrolle
- 20: Führungsschlitz
- 21: Pfeil
- 22: Reinflüssigkeitskammer
- 23: Reinflüssigkeitskammer
- 24: Lochboden
- 25: Lochboden
- 26: Behälter
- 27: Rohrleitung
- 28: Auffangwanne
- 29: Reinigungseinrichtung
- 30: Düse
- 31: Düse
- 32: Sprühstrahl
- 33: Sprühstrahl
- 34: Motor
- 35: Laschen
- 36: Befestigungskopf
- 37: Halteknopf
- 38: Rolle
- 39: Umlenkhilfe
- 40: Träger
- 41: Kugelandruckelement
- 42: Kugel
- 43: Kunststoffprofil
- 44: Traverse
- 45: Pfeil
- 46: Pfeil
- 47: Kette
- 48: Befestigungspunkt
- 49: Kettenrad
- 50: Kettenrad
- 51: Reinigungsfeld
- 52: Kette
- 53: Flüssigkeitsauslauf
- 54: Ständer

## Patentansprüche

1. Bandfiltereinrichtung zur Reinigung verunreinigter Flüssigkeiten mit einer oberen, die verunreinigte Flüssigkeit aufnehmende Schmutzkammer (12), einer darunter angeordneten und die gereinigte Flüssigkeit aufnehmenden Reinkammer (22, 23) sowie einem dazwischen angeordneten, mit Flüssigkeitsdurchtrittsöffnungen versehenen Filterboden (24, 25), auf dem ein umlaufendes Filterband (14) in Abhängigkeit von der Menge der auf ihm abgelagerten Verunreinigung automatisch fortbewegbar angeordnet ist, wobei außerhalb der Schmutzkammer (12) eine innerhalb des umlaufenden Filterbandes (14) liegende Reinigungseinrichtung (29) vorgesehen ist, welche die auf dem Filterband (14) befindliche Verunreinigung entfernt, und wobei die Reinigungseinrichtung (29) wenigstens einen, oberhalb des Pegels der verunreinigten Flüssigkeit angeordneten Sprühkopf (30, 31) aufweist, dadurch gekennzeichnet, daß der Sprühkopf (30, 31) von unten her auf die Rückseite des Filterbandes (14) gerichtet ist, so daß die verschmutzte Reinigungsflüssigkeit unmittelbar der verunreinigten Flüssigkeit (13) zugeführt wird und eine Auffangrinne (27) vorgesehen ist, welche die von der Rückseite des Filterbandes (14) reflektierte Reinigungsflüssigkeit in die Reinkammer ableitet.

2. Bandfiltereinrichtung nach Anspruch 1, dadurch gekennzeichnet, daß die wenigstens eine Düse mit einem Antriebsmechanismus versehen ist, der über der zu reinigenden Fläche eine XY-Bewegung ausführt, wobei die Reinigung des Filterbandes vorzugsweise bei Stillstand des Filterbandes erfolgt.

3. Bandfiltereinrichtung nach einem der vorhergehenden Ansprüche, dadurch gekennzeichnet, daß eine Endloskette vorgesehen ist, welche das umlaufende endlose Filterband transportiert, wobei zur Befestigung des Filterbandes an der Endloskette Laschen vorgesehen sind und in diese Laschen das Filterband einknöpfbar ist und wobei die Laschen derart angeordnet sind, daß das Filterband im neutralen Querschnitt der Kette angeordnet ist.

4. Bandfiltereinrichtung nach Anspruch 3, dadurch gekennzeichnet, daß die Abdichtung der Schmutzkammer von der Reinkammer mittels eines Abdichtprofils erfolgt, welches längs der Schmutzkammer verläuft und Andruckelemente vorgesehen sind, die eine Kraft auf das Abdichtprofil in Richtung des Filterbandes ausüben.

5. Bandfiltereinrichtung nach einem der vorhergehenden Ansprüche, dadurch gekennzeichnet, daß die Schmutzkammer im wesentlichen V-fömrig ausgestaltet ist und im unteren Bereich der V-förmigen Kammer Umlenkhilfen angeordnet sind, auf welche sich die Transportkette abstützt.

6. Bandfiltereinrichtung nach einem der vorhergehenden Ansprüche, dadurch gekennzeichnet, daß für Transportkette und Tuch eine Spannvorrichtung oberhalb des Pegels der verunreinigten Flüssigkeit im Bereich der Umlenkung angeordnet ist.

7. Bandfiltereinrichtung nach Anspruch 6, dadurch gekennzeichnet, daß die Spannvorrichtung mit der Umlenkeinrichtung kombiniert ist.

8. Bandfiltereinrichtung nach einem der vorhergehenden Ansprüche, dadurch gekennzeichnet, daß zwei Düsen zur Reinigung des Filterbandes vorgesehen sind, wobei diese Düsen nebeneinander angeordnet sind und jeweils einen Streifen des Filterbandes besprühen, wobei sich die beiden Flächen geringfügig überlappen.

9. Bandfiltereinrichtung nach Anspruch 8, dadurch gekennzeichnet, daß die beiden Düsen in X- und in Y-Richtung verschiebbar angeordnet sind und an einer umlaufenden, an den Seiten des Filterbandes über Kettenräder umgelenkte und umlaufende Kette, befestigt sind.

## Claims

1. Band filter arrangement for cleaning contaminated liquids, including an upper contaminated liquid chamber (12) for accommodating the contaminated liquid, a filtrate chamber (22, 23) disposed therebeneath and for accommodating the cleaned liquid, and a filter base (24, 25) disposed therebetween and provided with through-apertures for liquid, on which base a circulatory filter band (14) is disposed so as to be automatically displaceable in dependence on the quantity of contaminated material deposited thereon, a cleaning arrangement (29) being provided externally of the contaminated liquid chamber (12), which arrangement lies inside the circulatory filter band (14) and removes the contaminated material situated on the filter band (14), and the cleaning arrangement (29) having at least one spray head (30, 31) disposed above the level of the contaminated liquid, characterised in that the spray head (30, 31) is orientated from below onto the rear side of the filter band (14), so that the contaminated liquid to be cleaned is supplied directly to the contaminated liquid (13), and a collecting trough (27) is provided for liquid being deflected from the rear side of the filter band (14), which trough conducts away the cleaning liquid into the filtrate chamber.

2. Band filter arrangement according to claim 1, characterised in that at least one nozzle is provided with a drive mechanism which executes an X-Y movement over the area to be cleaned, the filter band preferably being cleaned when the filter band is stationary.

3. Band filter arrangement according to one of the preceding claims, characterised in that an endless chain is provided, which conveys the circulatory endless filter band, lugs being provided to secure the filter band to the endless chain, and the filter band being fastenable in said lugs, and the lugs being provided so that the filter band is disposed in the neutral cross-section of the chain.

4. Band filter arrangement according to claim 3, characterised in that the contaminated liquid chamber is sealed from the filtrate chamber by means of a sealing profile, which extends longitudinally of the contaminated liquid chamber, and pressure elements are provided which exert a force upon the sealing profile in the direction of the filter band.

5. Band filter arrangement according to one of the preceding claims, characterised in that the contaminated liquid chamber has a substantially V-shaped configuration, and guide means are disposed in the lower region of the V-shaped chamber, the conveyor chain being supported on said means.

6. Band filter arrangement according to one of the preceding claims, characterised in that a tensioning device for the conveyor chain and cloth is disposed above the level of the contaminated liquid in the region of the deflection.

7. Band filter arrangement according to claim 6, characterised in that the tensioning device is combined with the guide means.

8. Band filter arrangement according to one of the preceding claims, characterised in that two nozzles are provided for cleaning the filter band, said nozzles being disposed adjacent each other and spraying a respective strip of the filter band, the two areas slightly overlapping each other.

9. Band filter arrangement according to claim 8, characterised in that the two nozzles are disposed so as to be displaceable in the X direction and in the Y direction and are mounted on a circulatory chain, which is guided at the sides of the filter band via chain wheels.

## Revendications

1. Dispositif de filtration à bande pour la purification de liquides malpropres avec une chambre sale (12) recevant le liquide malpropre, une chambre propre (22, 23), disposée en dessous et recevant le liquide purifié et un fond filtrant (24, 25) disposé entre et pourvu d'orifices de passage pour le liquide, fond sur lequel est disposé de façon à avancer automatiquement une bande de filtration (14) qui circule en fonction de la quantité de saletés qui se déposent dessus, un dispositif de nettoiement (29) étant prévu en dehors de la chambre sale (12), dispositif qui se trouve à l'intérieur de la bande de filtration circulante (14) et qui enlève les saletés qui se trouvent sur la bande de filtration (14), et dans lequel le dispositif de nettoiement (29) présente au moins une tête d'aspersion (30, 31), disposée au-dessus du niveau du liquide malpropre,
caractérisé en ce que
la tête d'aspersion (30, 31) est orientée à partir du bas vers la face arrière de la bande de filtration (14), de telle sorte que le liquide de nettoiement sali soit directement amené au liquide malpropre (13) et une gouttière de recueil (27) étant prévue qui évacue le liquide de nettoiement, renvoyé par la face arrière de la bande de filtration (14) dans la chambre propre.

2. Dispositif de filtration à bande selon la revendication 1,
caractérisé en ce qu'
au moins une buse est pourvue d'un mécanisme d'entraînement, qui exécute un mouvement en XY sur la surface à nettoyer, le nettoiement de la bande de filtration ayant lieu de préférence quand la bande de filtration est arrêtée.

3. Dispositif de filtration à bande selon l'une des revendications précédentes,
caractérisé en ce qu'
il est prévu une chaîne sans fin qui transporte la bande de filtration sans fin circulante, des attaches étant prévues pour fixer la bande de filtration sur la chaîne sans fin et la bande filtrante pouvant être boutonnée dans ces attaches, lesquelles sont disposées de telle façon que la bande de filtration est disposée dans la section transversale neutre de la chaîne.

4. Dispositif de filtration à bande selon la revendication 3,
caractérisé en ce que l'étanchéité de la chambre sale a lieu par rapport à la chambre propre au moyen d'un profilé d'étanchéité qui s'étend le long de la chambre sale et des éléments de compression étant prévus qui exercent une force sur le profilé d'étanchéité en direction de la bande de filtration.

5. Dispositif de filtration à bande selon l'une des revendications précédentes,
caractérisé en ce que
la chambre sale a sensiblement la forme d'un V et en ce que dans la zone inférieure de la chambre en forme de V sont disposés des organes de renvoi sur lesquels prend appui la chaîne de transport.

6. Dispositif de filtration à bande selon l'une des revendications précédentes,
caractérisé en ce que
pour la chaîne de transport et le drap on dispose un dispositif de tension au-dessus du niveau du liquide malpropre dans la zone de renvoi.

7. Dispositif de filtration à bande selon la revendication 3,
caractérisé en ce que
le dispositif de tension est combiné avec le dispositif de de renvoi.

8. Dispositif de filtration à bande selon l'une des revendications précédentes,
caractérisé en ce que
deux buses sont prévues pour le nettoiement de la bande de filtration, ces buses étant disposées côte à côte et aspergeant respectivement un ruban de la bande de filtration, les deux surfaces se recouvrant légèrement.

9. Dispositif de filtration à bande selon la revendication 8,
caractérisé en ce que
les deux buses sont disposées de façon à pouvoir coulisser dans le sens X et dans le sens Y et sont fixées sur une chaîne circulante et renvoyée sur les côtés de la bande de filtration au moyen de roues de chaîne.
